# EUROPÄISCHE PATENTANMELDUNG

(11) **EP 2 965 974 A1**
(43) Veröffentlichungstag der Anmeldung: **13.01.2016**
(21) Anmeldenummer: 14002342.5
(22) Anmeldetag: 08.07.2014
(51) Int. Cl.: B62J 1/00

(54) **Fahrradsattel mit zwei Stufen**

(71) Anmelder: SQlab GmbH, 82024 Taufkirchen (DE)
(72) Erfinder: Hild, Tobias, 82024 Taufkirchen (DE)
(74) Vertreter: Koelle, Alexander

(57) **Zusammenfassung**

Sattel für Zweiräder, insbesondere für Fahrräder, bestehend aus wenigstens einer harten Sattelschale und wenigstens einer Strebe (3), insbesondere zwei Streben (3) wobei im hinteren Bereich des Sattels (5) zwei Auflageflächen (8, 9) für die Sitzknochen und/oder die Schambeine eines Fahrradfahrers vorgesehen sind und wobei die beiden Auflageflächen (8, 9) die höchste Erhebung (HE) des Sattels, insbesondere gegenüber der Sattelnase (7, SN), darstellen, sowie zwischen der Sattelnase (7, SN) und den beiden ersten Auflageflächen (8, 9) als höchste Erhebung (HE) eine erste Stufe (11) und eine zweite Stufe (14) mit dem Auflageniveau (10) vorgesehen sind und wobei dadurch zwei weitere Auflageflächen (12, 13) für die Sitzknochen oder Schambeine eines Fahrradfahres, vorzugsweise für die Schambeine eines Fahrradfahrers, vorhanden sind.

## Beschreibung

### Technisches Gebiet

Die Erfindung betrifft einen Sattel für ein Zweirad, bestehend aus einer herkömmlichen harten Sattelschale und einem herkömmlichen Sattelgestell mit wenigstens zwei Streben. Unter einem Zweirad wird ein lenkergeführtes Fahrrad, wie ein übliches Fahrrad, ein Mountain-Bike, ein Rennrad, ein Motorrad und ein Mofa, aber auch ein Motorrad mit zwei hinteren Antriebsrädern und einem Vorderrad verstanden.

### Stand der Technik

Bekannt sind herkömmliche Ausführungsformen eines Sattels für Zweiräder, wobei insbesondere bei Sätteln für Rennräder die Form bislang so gestaltet wurde, dass das Körpergewicht auf dem Dammbereich, den Schambeinen und/oder dem Schambeinbogen und weniger auf den Sitzknochen lastet.

Nachteil dieser Sattelformen ist, dass bei Männern auf den Dammbereich und bei Frauen im Bereich der Schambeine und des Schambeinbogens ein zu hoher Druck lastet. Es besteht die Gefahr, dass beim Mann der hohe Druck im Dammbereich negative Auswirkungen auf die sexuelle Leistungsfähigkeit des Mannes haben kann. Bei Frauen liegt der Schambeinbogen meist etwas tiefer als beim Mann, so dass dieser meistens schmerzhaft auf die Sattelnase drückt. In der Vergangenheit gab es verschiedene Lösungsansätze verschiedener Sattelhersteller, den Druck im Dammbereich oder im Bereich der Schambeine und des Schambeinbogens zu senken, z.B. durch die Verwendung einer weichen Sattelnase, beispielsweise durch die Verwendung von Gel oder von Aussparungen und Löchern im Sattel. Sättel mit derartigen Merkmalen sind bereits aus EP 1 394 025 und aus US 5 356 205 bekannt geworden. Mit diesen Sätteln kann jedoch eine noch nicht ausreichende Druckentlastung im Dammbereich bzw. Schambeinbereich erreicht werden.

### Offenlegung der Erfindung

Aufgabe der vorliegenden Erfindung ist es, sowohl den Druck bei Männern im Dammbereich und/oder bei Frauen im Bereich der Schambeine und des Schambeinbogens zu senken und diese Druckstellen zu entlasten als auch dann in der logischen Folge den Druck auf den Sitzknochen zu reduzieren und besser zu verteilen, ohne dabei jedoch auf die bislang bekannten Lösungsansätze zurückzugreifen.

Ferner ist Aufgabe der Erfindung, die durch die Tretbewegung wechselseitig auftretenden Druckspitzen an den Sitzknochen zu minimieren, eine bessere Druckverteilung zu ermöglichen und Rückenbeschwerden vorzubeugen.

Dazu wurden mehrere hundert Personen aller Altersstufen und beider Geschlechts genau vermessen, insbesondere wurde der Abstand der Sitzknochen mittels eines eigens hierfür entwickelten Messverfahrens gemessen. Es zeigte sich, dass der Sitzknochenabstand unabhängig von Geschlecht, Körpergröße und Körpergewicht um bis zu maximal 8 cm abweicht. Ein weiterer Faktor ist die Höhe des Schambeinbogens aus welcher sich der Winkel errechnet, in dem die Schambeine zum Schambeinbogen in Abhängigkeit vom Sitzknochenabstand zusammenlaufen. Hinzu kommen ein unterschiedlicher Knochenbau und eine unterschiedliche Beckenbodenmuskulatur. Darüber hinaus nimmt das Schmerzempfinden an den Sitzknochen mit zunehmender Fahrzeit und mit einer gewissen Abhärtung ab. Insbesondere zu Saisonbeginn ist das Schmerzempfinden an den Sitzknochen höher als in der Saisonmitte. Aufgrund dieser sehr individuellen und von außen nicht ohne weiteres erkennbaren Körpermerkmale war es bis jetzt noch nicht möglich, einen Sattel herzustellen, der unabhängig von Geschlecht, Körpergröße und Körpergewicht den Druck auf den vorerwähnten Druckstellen senkt. Mit den Erfindungen nach DE 20 2004 014 467.0 und DE 20 2005 013 749.9 war es möglich, die erwähnte Entlastung auf den vorerwähnten Druckstellen zu senken und eine individuelle Einstellung auf die Körpermerkmale des Fahrers zu gewährleisten. Die vorliegende Erfindung ist eine Weiterentwicklung von DE 20 2004 014 467.0, DE 20 2005 013 749.9 und EP 2 003 046 B1.

Komfort- und druckentlastende Faktoren sind grundsätzlich das Polster, das Bezugsmaterial, die Größe der Auflagefläche, die Form der Auflagefläche und die Federung. Federungen von Sätteln wurden bislang über zwei Federn aus Federstahl oder Elastomeren im hinteren Bereich des Sattels realisiert. Eine weitere Möglichkeit bestand darin die Materialelastizität und - anpassungsfähigkeit zu nutzen. Bei einem weicheren Material der Sattelschale begann die Sattelschale aber sich in Längsrichtung zu verbiegen, was keinen Vorteil für die Sitzknochen brachte, die im hinteren Teil des Sattels relativ weit außen auf dem Sattel aufliegen. Die Verwendung von unterschiedlich harten Materialien in der Sattelschale hat sich lange Zeit als die beste Methode herausgestellt, die Elastizität und Anpassungsfähigkeit der Sattelschale so zu beeinflussen, dass an bestimmten Stellen ein Nachgeben oder Verbiegen möglich ist und an anderen Stellen nicht. Messungen mittels einer elektronischen Druckmessfolie auf dem Sattel eines stationären Fahrrads über einen längeren Zeitraum haben nicht nur die Druckverteilung an den Sitzknochen und im Dammbereich bzw. im Schambeinbereich ergeben, sondern auch, dass die Druckspitzen an den Sitzknochen auftreten und in derselben Frequenz wie die Trittfrequenz extrem von der linken auf die rechte Sattelseite und wieder zurück wandern. Ein steifer Sattel wirkt dieser Beckenbewegung nur unnötig entgegen.

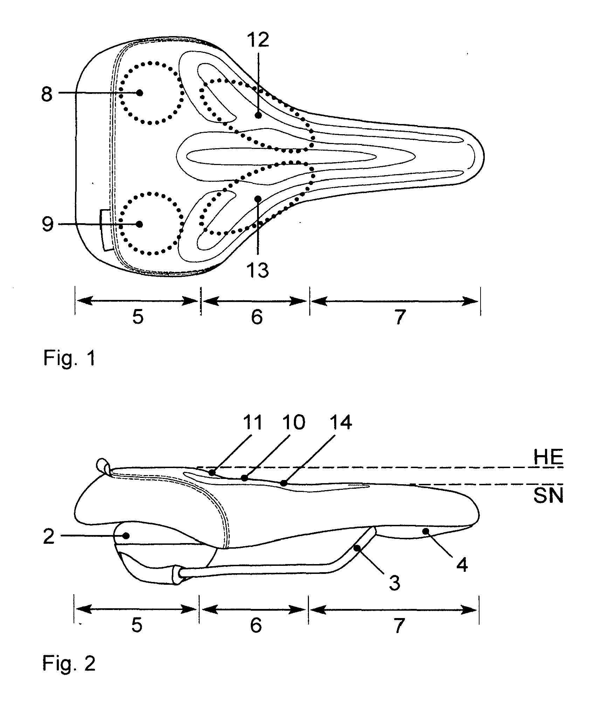

Der herkömmliche Stufensattel verteilt das Körpergewicht vom empfindlichen Dammbereich auf die dafür vorgesehenen Sitzknochen. Die Sitzknochen lasten dabei auf der erhöhten Sitzfläche im hinteren Sattelbereich und nehmen so den Großteil des Körpergewichts auf. Da die Sitzknochen auf hohen Druck zunächst mit Schmerz reagieren, ist die Passform des Stufensattels sehr wichtig. Es hat sich in Praxistests und bei Tests mit elektronischen Druckmesssystemen herausgestellt, dass in moderater bis sportlicher Sitzposition je nach Beckenform häufig nur die Schambeine auf der erhöhten Sitzfläche im hinteren Sattelbereich aufliegen. Die tatsächlichen Sitzknochen liegen jedoch nur bei sehr aufrechter Sitzposition auf dem Sattel auf. Bereits bei einer moderat nach vorne gebeugten Sitzposition, wie z.B. auf dem Trekkingrad oder auch MTB, rollt das Becken über die Sitzknochen auf die Schambeine. Fahrradsättel mit einer Stufe sind bekannt aus DE 20 2005 013 749.9 und dem dortigen Unteranspruch 6 und Fig. 2 sowie aus DE 19938042.2 und EP 2003046 B1, dort Unteranspruch 2 und Fig. 5. Eine weitergehende Druckentlastung der Sitzknochen und eine günstigere Druckverteilung ist bei derartigen Sätteln aber nicht mehr erreichbar.

Die Aufgabe der vorliegenden Erfindung wird erfindungsgemäß durch die kennzeichnenden Merkmale des ersten Patentanspruchs gelöst. Durch die Merkmale der Unteransprüche wird die Erfindung vorteilhaft ausgestaltet bzw. modifiziert.

Die Erfindung besteht aus einem Sattel mit zwei Stufen nach Anspruch 1. Dadurch wird es zum einen möglich, dass bei aufrechter und moderater Sitzposition eine Druckentlastung im Bereich der Sitzknochen erzielt werden kann. Dies gelingt dadurch, dass nun zusätzlich auch die Schambeine im Bereich der zusätzlichen, zweiten Stufe im mittleren Sattelbereich aufliegen. Zum anderen ist es möglich, bei einer Sitzposition auf den Schambeinen, also bei einer sportlichen bis sehr sportlichen Sitzposition, wie z.B. bei der Sitzpositon auf einem Zeitfahrrad oder Rennrad, durch ein nach hinten rutschen auf dem Sattel eine Entlastung des auf den Schambeinen lastenden Drucks dadurch eintreten zu lassen, dass nunmehr auch die Sitzknochen auf der erhöhten Sitzfläche im hinteren Sattelbereich als höchste Erhebung des Sattels zum Aufliegen kommen. Das Vorsehen einer zweiten Stufe führt bei sportlicher Fahrweise also dazu, dass zusätzliches Körpergewicht weg von den Schambeinen auf die Sitzknochen verlagert wird bzw. verlagert werden kann, wenn der Fahrradfahrer in seiner stark geneigten Sitzposition von der Sattelnase aus auf dem Sattel etwas nach hinten in Richtung höchster Erhebung des Sattels sich mit seinem Gesäß bewegt. Ferner verlagert sich bei einer aufrechten Sitzposition beim Übergang zu einer sportlichen Fahrweise des Fahrers die Auflagefläche weg von den Sitzknochen hin zu den Schambeinen. Dadurch tritt in beiden Fällen eine erhebliche Druckentlastung der Sitzknochen und/oder der Schambeine ein, da die Auflagefläche auf dem Sattel vergrößert wird und dadurch der Druck auf den Sitzknochen und/oder Schambeinen naturgesetzlich sinkt. Es kommt nicht nur zu der vorgenannten Druckentlastung, sondern es wird auch eine Steigerung des Komforts bewirkt. Durch die beiden hinteren Auflageflächen als höchste Erhebung des Sattels bleibt dabei weiterhin der Vorteil des klassischen Stufensattels mit nur einer Stufe und mit seiner typischen Druckverteilung nach medizinischen Gesichtspunkten voll erhalten.

Desweiteren kann der Sattel jedoch - ausgelöst durch die Tretbewegung - in einer weiteren Ausführungsform kippen, wodurch sich die wechselseitig auftretenden Druckspitzen an den Sitzknochen minimieren lassen. Dabei hilft die Kippbewegung des Sattels mittels des Dämpfers Rückenleiden und Rückenbeschwerden vorzubeugen und zu verhindern, da die Wirbel gezielt und kontrolliert bewegt werden. Da der Sattel - ausgelöst durch die Tretbewegung - kippen kann, lassen sich die wechselseitig auftretenden Druckspitzen an den Sitzknochen zusätzlich noch minimieren.

In der Zeichnung zeigt:
Fig. 1 eine Draufsicht von oben auf den Sattel mit den beiden hinteren, ersten Auflageflächen 8 und 9 für die Sitzknochen, der höchsten Erhebung des Sattels HE im hinteren Bereich des Sattels 5, den beiden mittleren, zweiten Auflageflächen 12 und 13 im mittleren Bereich des Sattels 6 und der zweiten Stufe 10 und der Sattelnase 7
Fig. 2 eine Seitenansicht mit dem hinteren Auflageflächenbereich im hinteren Bereich des Sattels 5, dem zweiten, mittleren Auflagenflächenbereich mit den Auflageflächen 12, 13 im mittleren Sattelbereich 6 und der Sattelnase 7, SE sowie der Darstellung der Steigung der ersten Stufe 11 gegenüber der zweiten Stufe 10 und der Steigung der zweiten Stufe 14 gegenüber der Sattelnase 7, SN

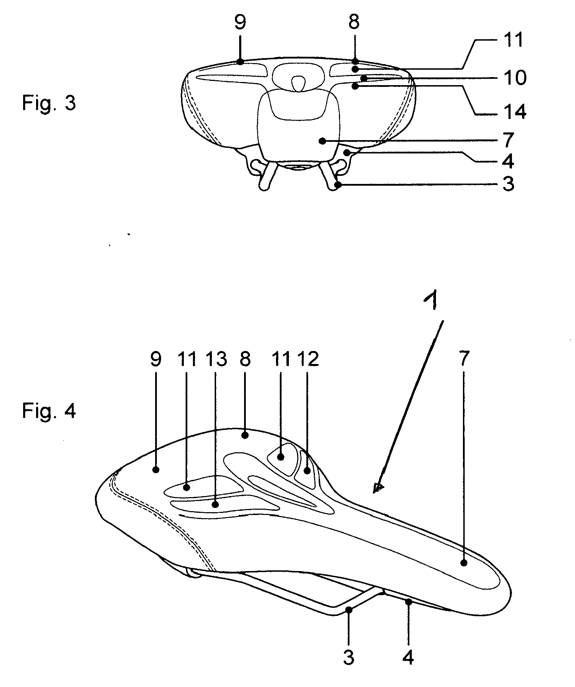

Fig. 3 eine Vorderansicht des Sattels mit den hinteren Auflageflächen 8 und 9 als höchster Erhebung des Sattels HE, der Steigung der ersten Stufe 11 und der Steigung der zweiten Stufe 14 sowie der zweiten Stufe 10 (als zweite, mittlere Auflageflächen 12, 13) sowie die Sattelnase 7, SN
Fig. 4 zeigt eine perspektivische Draufsicht auf den Sattel mit den beiden hinteren Auflageflächen 8 und 9, der ersten Stufe 11, den beiden zweiten, mittleren Auflageflächen 12 und 13

Durch einen Sattel mit zwei Stufen wird es möglich, dass bei aufrechter und moderater Sitzposition eine Druckentlastung im Bereich der Sitzknochen erreicht werden kann. Dies gelingt dadurch, dass nicht nur die Sitzknochen im hinteren Sattelbereich 5 auf den beiden hinteren Auflageflächen 8, 9 lasten, sondern dass zusätzlich auch die Schambeine im Bereich der zusätzlichen Stufe im mittleren Sattelbereich 6 auf den zweiten, mittleren Auflageflächen 12, 13 lasten. Zum anderen ist es möglich, dass bei einer Sitzposition auf den Schambeinen im Bereich der zusätzlichen Stufe 6 auf den zweiten, mittleren Auflageflächen 12, 13, also bei sehr sportlicher Sitzposition, durch ein nach hinten rutschen auf dem Sattel eine Entlastung dadurch eintritt, dass nunmehr auch die Sitzknochen auf der erhöhten Sitzfläche 5 als höchste Erhebung HE des Sattels auf den Auflageflächen 8, 9 zum Aufliegen kommen. Das Vorsehen einer zweiten, mittleren Stufe 10 führt bei sportlicher Fahrweise also dazu, dass zusätzliches Körpergewicht weg von den Schambeinen auf die Sitzknochen verlagert werden kann, wenn der Fahrradfahrer in seiner stark geneigten Sitzposition von der Sattelnase 7 aus auf dem Sattel mit seinem Gesäß etwas nach hinten in Richtung höchster Erhebung 5, HE des Sattels bewegt und dadurch die Sitzknochen auf den beiden hinteren Auflageflächen 8, 9 zur Auflage kommen und dort lasten. Auch verlagert sich bei einer sehr aufrechten Sitzposition beim Übergang zu einer sportlichen Fahrweise des Fahrers die Auflagefläche weg von den Sitzknochen und von dem hinteren Sattelbereich 5 hin zu den Schambeinen, die dann zur Auflage im mittleren Sattelbereich 6 auf den Auflageflächen 12, 13 kommen. Dadurch tritt in beiden Fällen eine erhebliche Druckentlastung der Sitzknochen und/oder der Schambeine ein, da die Auflagefläche auf dem Sattel vergrößert wird und dadurch der Druck auf den Sitzknochen und/oder Schambeinen naturgesetzlich sinkt.

### Bezugszeichenliste

- 1: Sattel
- 2: Dämpfer
- 3: Strebe
- 4: Halterung / Befestigung der Streben an der Sattelnase,
- 5: Hinterer Sitzbereich im Bereich des hinteren Stattelteils, entspricht der höchsten Erhebung des Sattels (HE)
- 6: Mittlerer Sitzbereich im Bereich der zweiten Stufe, mittlerer Sattelteil
- 7: Sattelnase (SN)
- 8: Hintere Auflagefläche für die Sitzknochen links
- 9: Hintere Auflagefläche für die Sitzknochen rechts
- 10: Mittlerer Auflagenbereich der Sitzknochen, zweite Stufe
- 11: Steigung der ersten Stufe, also von der hinteren Auflagenfläche gegenüber der mittleren Auflagefläche
- 12: Mittlere Auflagefläche für die Schambeine links
- 13: Mittlere Auflagefläche für die Schambeine rechts
- 14: Steigung der zweiten Stufe, also von der mittleren Auflagenfläche gegenüber der Sattelnase

## Patentansprüche

1. Sattel für Zweiräder, insbesondere für Fahrräder, bestehend aus wenigstens einer harten Sattelschale und wenigstens einer Strebe (3), insbesondere zwei Streben (3) **dadurch gekennzeichnet, dass**
- im hinteren Bereich des Sattels (5) zwei Auflageflächen (8, 9) für die Sitzknochen und/oder die Schambeine eines Fahrradfahrers vorgesehen sind und wobei
- die beiden Auflageflächen (8, 9) die höchste Erhebung (HE) des Sattels, insbesondere gegenüber der Sattelnase (7, SN), darstellen, sowie
- zwischen der Sattelnase (7, SN) und den beiden ersten Auflageflächen (8, 9) als höchste Erhebung (HE) eine erste Stufe (11) und eine zweite Stufe (14) mit dem Auflageniveau (10) vorgesehen sind und wobei dadurch
- zwei weitere Auflageflächen (12, 13) für die Sitzknochen oder Schambeine eines Fahrradfahrers, vorzugsweise für die Schambeine eines Fahrradfahrers, vorhanden sind.

2. Sattel nach Anspruch 1, **dadurch gekennzeichnet, dass** der Sattel (1) aus einem Verbundwerkstoff besteht, insbesondere aus einem mit Kohlenstofffasern verstärktem Kunststoff.

3. Sattel nach Anspruch 1 oder 2, **dadurch gekennzeichnet, dass** die Streben (3) aus einer Titanlegierung bestehen.

4. Sattel nach einem der Ansprüche 1 bis 3, **dadurch gekennzeichnet, dass** die zwei höheren Auflageflächen (8, 9) lösbar, insbes, mit einem Klettverschluss, im Bereich der hinteren Auflagenfläche (5, HE) auf dem Sattel befestigt werden können.

5. Sattel nach einem der Ansprüche 1 bis 4, **dadurch gekennzeichnet, dass** die zwei höheren Auflageflächen (8, 9) und/oder die beiden tiefer liegenden Auflageflächen (12, 13) in der Sattelschale versenkt sind.

6. Sattel nach einem der Ansprüche 1 bis 5, **dadurch gekennzeichnet, dass** in dem hinteren Bereich des Sattels (5) ein Dämpfungselement (2) angeordnet ist, welches fest mit der Strebe oder den Streben (3) verbunden ist und eine seitliche Kippbewegung des Sattels (1), vorzugsweise im Bereich von 3° bis 14° zur Horizontalen, sowohl zur linken als auch zur rechten Seite, ermöglicht.
